# EUROPEAN PATENT APPLICATION

(11) **EP 3 789 475 A1**
(43) Date of publication of application: **10.03.2021**
(21) Application number: 19290084.3
(22) Date of filing: 05.09.2019
(51) Int. Cl.: C10J 3/78

(54) **COMBINATION OF ANAEROBIC TREATMENT OF CARBONACEOUS MATERIAL WITH HYDROTHERMAL GASIFICATION TO MAXIMIZE VALUE ADDED PRODUCT RECOVERY**

(71) Applicant: SUEZ Groupe, 92040 Paris la Défense Cedex (FR)
(72) Inventor: Haddad, Mathieu, 92310 Sevres (FR); Pardo, Pierre-Emmanuel, 91400 Orsay (FR)
(74) Representative: Marks & Clerk France

(57) **Abstract**

The invention relates to a method for treating carbonaceous material, said method comprising:
a) Providing a carbonaceous material CM,
b) Subjecting the carbonaceous material CM to hydrothermal gasification in a HTG reactor (11), thereby producing:
- an inorganic solid residue (12),
- a first gaseous fraction G1 comprising CH₄, CO, CO₂ and H₂, and
- a filtrate F1 containing readily biodegradable carbons such as VFAs,

c) Subjecting at least part of the filtrate F1 to an anaerobic treatment step in an anaerobic tank (13), leading to a digestate (14).

The invention also relates to an installation for treating carbonaceous material.

## Description

The invention relates to the treatment of carbonaceous material such as sludge, and more particularly of sludge from wastewater or organic waste treatment plants.

### TECHNOLOGICAL BACKGROUND

Sludge treatment methods usually involve valorization of the carbon contained into the sludge by producing methane-containing gases (syngas or biogas) usually through anaerobic digestion.

However, anaerobic digestion does not degrade all organic matter contained into the sludge. The remaining carbon containing digestate may be either recycled, usually through spreading on agricultural land as fertilizer (also containing nitrogen and phosphorus), or disposed of after dewatering to minimize the costs associated with disposal.

However, even with recycling part of the digestate, sludge disposal or destruction remains costly.

Indeed, spreading on land may only be performed during a limited time of year, so that recycling requires storage capacity for a period of 6 to 9 months, with a batch management system to ensure traceability. On a cost-effective level, this issue justifies processes that will reduce the tonnage of sludge to be stored.

With regard to disposal of the remaining dewatered sludge, disposal at a landfill site is less and less competitive because of cost increase. In addition, regulations, in particular in Europe, tend to limit as much as possible landfill disposal.

Destruction methods use thermal processes (dedicated incineration or co-incineration, pyrolysis/gasification, wet method oxidation) destroy the remaining organic matter as comprehensively and cost-effectively as possible in such a way that all that remains to be recovered is an ultimate mineral residue, which may be recycled depending on local regulation.

Destruction processes involving oxidation reactions are known as combustion or incineration, and usually require high concentrations of O2. On the other hand, pyrolysis (or thermolysis) process thermally degrades carbonaceous matter in the absence of air (and oxygen). Gasification is a process in which materials are exposed to some oxygen, but not enough to allow combustion to occur. These processes do not oxidize organic matter but "crack" it, producing reducing gases (termed syngas): CO, CH₄, CₙHₘ...

However, such destruction requires dewatering of the sludge/waste, with relatively high levels of dewatering. This step is rendered all the more difficult as the digestate contains high levels of organic material such as VFAs, which hinders or makes difficult any direct dewatering technology placed downstream of the fermentation reactor to separate the liquid fraction containing the VFA and the solid fraction. The cost of the dewatering step adds to the cost of the destruction step as such, which usually requires top-up energy (fuel).

Document WO2015/189775 discloses a method for the conversion of mainly cellulosic material, the method comprising a first step of thermochemical treatment and a second step of anaerobic treatment. It is to be pointed out that the method of document WO2015/189775 aims at converting mainly cellulosic material, whereas the method of the invention aims at converting carbonaceous material such as sludge.

Furthermore, the method of document WO2015/189775 is directed to a material with a carbon/nitrogen ratio greater than 50 and high dry solid content. This method is not directly applicable to the treatment of carbonaceous material with a low carbon/nitrogen ratio, or low dry solid content, or high inorganics content.

Moreover, document WO2015/189775 teaches the necessity to limit the temperature of the thermochemical treatment being a pyrolysis (maximum of 325°C) to avoid toxicity problems of the pyrolysis products in the anaerobic treatment which would lead, in case of higher temperature, to a poor convertibility thereof. Considering a gasification as a thermochemical treatment, it is performed at a temperature between 650 and 800°C. The gasification of document WO2015/189775 is not a hydrothermal gasification in the sense of the hydrothermal gasification of the present invention.

Hydrothermal gasification (or HTG) is a disruptive technology that is extremely promising for sludge treatment as it completely changes the technological paradigm: sludge is treated as is, and reduced into syngas (a fuel) without the need for drying, thickening or dewatering. No organic matter is left. Ashes are concentrated in both heavy metals and nutrients, which can then be recovered. However, to achieve this result, severe conditions including high temperature, are required. This technology can thus be very energy consuming, and not cost-effective to date.

There is thus a need for providing a method for treating carbonaceous material and in particular sludge/waste, which would limit or even avoid production of sludge, while allowing to still use sludge as a material useful in circular economy. In particular, there is a need for a method for treating carbonaceous material and in particular sludge, which would limit or even avoid production of sludge, while allowing to produce syngas and/or biomethane (a "green" source of energy), and valuable organic substrates. Advantageously, the method of the invention would allow for easy purification of these valuable organic substrates. It should also be cost-effective and easy to implement.

### SUMMARY

The present invention thus provides a method for treating carbonaceous material combining anaerobic digestion (AD) or fermentation with hydrothermal gasification (HTG) to produce biogas and/or syngas, and valuable organic compounds (in particular VFAs) while eliminating the production of any solids to be disposed of, such as sludge.

More specifically, the invention relates to a method for treating carbonaceous material, said method comprising:
a) Providing a carbonaceous material CM,
b) Subjecting the carbonaceous material CM to hydrothermal gasification, thereby producing:
   - an inorganic solid residue,
   - a first gaseous fraction G1 comprising CH₄, CO, CO₂ and H₂ (i.e. syngas), and
   - a filtrate F1 containing readily biodegradable carbons such as VFAs,
c) Subjecting at least part of the filtrate F1 to an anaerobic treatment step, leading to a digestate and optionally to a second gaseous fraction G2 containing CH₄ and CO₂.

As used herein, a "carbonaceous material" is understood as a mixture of organic and inorganic materials, such as biomass. The carbonaceous material is typically wet. Its dry solid content is advantageously between 3 and 25%. Examples of carbonaceous material are organic wastes or sludge, and more particularly of sludge from organic waste or drinking water or wastewater treatment plants. Preferably, carbonaceous material CM comprises primary sludge, biological sludge, organic waste or mixtures thereof. Biological sludge typically contains WAS (waste activated sludge), TWAS (thickened waste activated sludge), or RAS (recycled activated sludge), or mixtures thereof. In addition, the carbonaceous material of the invention typically has a carbon/nitrogen ratio (C/N ratio) of less than 50, usually between 5 and 40, such as between around 10 and around 20. In addition, the carbonaceous material usually has a relatively high inorganic content, in particular of 10% or more, and up to 20% or more.

As used herein, an "inorganic solid residue" is understood as the solid HTG residue, which consists essentially of inorganic salts, and include metallic salts as well as sulfates, carbonates and hydrocarbonates. Inorganic solid residues are also generally called "ashes" of the HTG process.

As used herein, an "anaerobic treatment" is understood as anaerobic digestion, or fermentation, which may be considered as a partial anaerobic digestion. The anaerobic treatment of step c) is typically carried out in an anaerobic tank.

"Fermentation" is a process well-known in the art and may be defined as a biological anaerobic process extracting energy from carbohydrates in the absence of oxygen, to produce small molecules (organic substrates), in particular RBCs, through the action of enzymes in particular. No CH₄ is produced, or only traces amounts. There are five main types of fermentation:
- Alcoholic Fermentation, yielding mainly ethanol,
- Lactic Acid Fermentation, yielding lactate,
- Propionic Acid Fermentation, yielding propionate,
- Butyric Acid / Butanol Fermentation, yielding butyrate and butanol,
- Mixed Acid Fermentation, yielding VFAs (mainly acetate, but also propionate, lactate, butyrate).

The fermentation process may be controlled by the retention time of the sludge into the anaerobic tank, temperature and pH in the anaerobic tank, as well as by the specific microbial population involved in the fermentation process (i.e. by the choice of microbial strains in the anaerobic tank).

Anaerobic digestion is a process involving microorganisms that break down biodegradable material in the absence of oxygen. This process produces a digestate and a gaseous fraction (G2) comprising methane, and typically consisting essentially of methane and CO₂, also called biogas.

Advantageously, the anaerobic digestion is a digestion of effluents containing soluble components only, in particular soluble carbon i.e. containing no more suspended solids. Advantageously, the suspended solids have been solubilized in the HTG step. An optional dedicated anaerobic digestion may further take place, such as a UASB type (upflow anaerobic sludge blanket digestion), i.e. treating soluble carbon.

The anaerobic treatment is usually performed at pH conditions between 7,0 and 7,5, preferably between 7,0 and 7,2.

Conventionally, a "digestate" is the non-gaseous product of an anaerobic digestion, while the "fermentate" is the fermentation product. However, in the present invention, unless stated otherwise, the word "digestate" will encompass the non-gaseous product of the anaerobic treatment, that is, respectively a "conventional" digestate for a digestion, and a "fermentate" for a fermentation.

A digestate, and more specifically a fermentate, comprises RBCs, and more particularly VFAs or other fermentation products such as lower alcohols - in particular of formula R-OH with R representing a saturated, linear or ramified C₁-C₄ hydrocarbon chain, notably ethanol or butanol - depending on the selected fermentation pathway.

"RBCs" or "readily biodegradable carbons" are well known from the person of skill in the art. They are for instance defined in "Activated Sludge Models ASM1, ASM2 and ASM3", edited by the IWA task group on mathematical modelling for design and operation of biological wastewater treatment, Henze et al (2000), ISBN 1 900222 24 8. Examples of readily biodegradable carbons are volatile fatty acids. RBCs may be generated by fermentation, for instance as in the unified fermentation and thickening (UFAT) process, disclosed in particular in US 6,387,264.

"VFAs" or "volatile fatty acids" are also well-known to the one of skill in the art. In particular, they include lower carboxylic acids, notably C₁-C₄ saturated, linear or ramified hydrocarbon chains substituted by a COOH group, such as lactic acid, butyric acid, propionic acid, and acetic acid.

Hydrothermal gasification (HTG) is a thermal depolymerization process used to convert carbonaceous material - in particular wet biomass - into a mixture comprising only small molecules under high to moderate temperature and high pressure. It is well known in the art, and is for instance described in WO2013/030026 or WO2013/030027. The HTG step b) is usually carried out in an HTG reactor. It is also described in WO99/00334 or and US2017/0342327 in combination with an oxidation step.

During HTG, carbon and hydrogen of a carbonaceous material, such as biomass, are thermo-chemically converted into hydrophobic compounds with low viscosity and high solubility. In essence, a limited amount of oxygen or air is introduced into the reactor to allow some of the organic material to be "burned" to produce carbon dioxide and energy, which drives a second reaction that converts further organic material to hydrogen and additional carbon dioxide. Further reactions occur when the formed carbon monoxide and residual water from the organic material react to form methane and excess carbon dioxide. This third reaction occurs more abundantly in reactors that increase the residence time of the reactive gases and organic materials, as well as heat and pressure.

As result, HTG may be regarded as 1) a phase separation, separating inorganic solid residues (namely ashes and salts) from the supercritical phase, which upon cooling yields a gaseous phase and a liquid phase, and 2) a depolymerisation process transforming organic carbonaceous material to more easily biodegradable material, such as RBCs.

Catalysts (homogeneous and/or heterogeneous) may be used to improve reaction rates and product quality. However, preferably, catalysts are not used in step b). In other words, advantageously, step b) is performed without the presence of any catalyst, be it homogenous or heterogeneous.

Processing conditions (in particular temperature, pressure, product concentration and to a less extent residence time) of the HTG may be adjusted to not only produce inorganic solid residues (ashes) and a gaseous fraction containing CH₄, CO, CO₂ and H₂ (syngas), but to also produce a filtrate (also referred to as "biocrude") containing mostly RBCs, particularly VFAs.

Of note, HTG is different from hydrothermal liquefaction (HTL), in particular in that the level of decomposition of the carbonaceous material in HTL is not as high as in HTG, even when HTG is operated under moderate temperatures. Indeed, HTL usually produces a biocrude that is an oil which can be used as a fuel, *i.e.* the biocrude contains organic molecules containing 5 carbon atoms or more.

The method, by coupling HTG downstream of AD, provides synergistic effects:
- by aiming at producing RBCs rather than fully converting the organic matter into syngas, the pressure and temperature operating conditions of HTG are lowered,
- the anaerobic treatment minimizes the HTG energy requirements by reducing the need to fully convert all organic matter into syngas, and is improved by the presence of RBCs into the filtrate F1.

The method further provides the following advantages:
- Significantly lowering, or even eliminating the amount of sludge to be disposed of, while maximising the production of syngas and/or biogas.
- Reducing the production of refractory COD or Nitrogen compounds compared to other hydrothermal technologies.
- Destroy difficulty to dewater sludge after a fermenter process.
- When the anaerobic treatment is a fermentation, producing a pure liquid high concentrated high value liquid.
- When the anaerobic treatment is a fermentation, removing the need for a dewatering step downstream the fermentation reactor (saving OPEx, in particular by avoiding the use of polymers).
- Reducing the overall amount of sludge that is produced, while maintaining the possibility for land application of sludge (typically either class A or class B sludge).
- Producing syngas and/or biogas, which may be upgraded downstream for instance through electricity production, grid reinjection, NLG production, etc.
- Allowing for nutrient recovery (in particular phosphorus (P)) in the ashes produced in the HTG step.

In an embodiment, the carbonaceous material CM is separated into a liquid fraction and a solid fraction, in particular by dewatering, prior to being subjected to step b). In this embodiment, a phase separation of the carbonaceous material CM is performed upstream the HTG and the HTG reactor is fed with the solid fraction from the phase separation. This configuration decreases the volume of the HTG reactor, thus reducing the size of the digester and the entire sludge treatment line.

The carbonaceous material CM may comprise primary sludge from a wastewater treatment plant. It may also or alternatively comprise biological sludge, and is optionally hydrolyzed and/or hygienized prior to being subjected to step c). In this embodiment, the carbonaceous material CM is thermally hydrolyzed (THP) and/or biologically hydrolyzed (BHP).

In a preferred embodiment, the HTG step is performed at a temperature of 500°C or below, preferably of 400°C or below, so that water in the HTG reactor is exposed to a temperature and a pressure allowing to keep water in a fluid fraction under sub- or supercritical conditions. Since pressure depends on temperature, fixing the temperature in the HTG reactor enables to a person skilled in the art to determine the adapted pressure. To maintain sub- or supercritical conditions and sufficient degradation of the organic matter, the temperature of the HTG step is advantageously of 300°C or above, preferably of 330°C or above. This temperature condition enables to promote the separation of the carbonaceous material CM into the various products of the HTG.

Pressure in the HTG step depends on the temperature and is chosen so as to maintain sub- or supercritical conditions.

In a first embodiment, the anaerobic treatment is fermentation. This embodiment allows to maximize the production of added value compounds such as VFAs.

In a second embodiment, the anaerobic treatment is anaerobic digestion. This embodiment allows to produce biogas. Therefore, in this embodiment, a second gaseous fraction G2 containing CH₄ and CO₂ (biogas) is produced in step c).

In an advantageous embodiment, the method further comprises a step d) of separating the digestate of step c) into a liquid fraction and a solid fraction. Separation is in particular a dewatering step. The liquid fraction of step d) may be mixed with the filtrate F1 in step c), or returned to headworks and/or to a sidestream treatment (*i.e.* a specific treatment dedicated to N-removal, for example: Cleargreen™).

However, preferably, the liquid fraction of step d) is subjected to a step of recovering the added value compounds such as VFAs. Such recovery techniques are known in the art. Therefore, in a preferred embodiment, in particular when the anaerobic treatment is fermentation, the method further comprises a step e) of recovering the added value compounds such as VFAs contained into the liquid fraction of step d).

In a particular embodiment, the digestate or the solid fraction of step d) is suitable for use as fertilizer to be spread on land. In this embodiment, the solid fraction or the digestate is advantageously a class A or class B sludge as defined in the 40 CFR Part 503 Biosolids rule, or by the EPA (Environmental Protection Agency).

Preferably, the solid fraction of step d) is combined with CM and the resulting mixture is subjected to the HTG step b). In this embodiment, no sludge or solid organic residue is produced: sludge disposal is completely avoided.

The method of the invention is flexible and allows to maximise energy production, in particular through biogas and/or syngas and/or hydrogen valorisation.

In a particular embodiment, at least part of the gaseous fraction G1 of step b) is subjected to bioaugmentation in H₂ or in CH₄. As used herein, "bioaugmentation" of syngas is understood as a relative concentration increase of a component of the syngas, namely H₂ or CH₄. Syngas bioaugmentation in:
- methane may be performed via biomethanation.
- hydrogen may be performed via water gas-shift reaction, preferably biological water gas-shift reaction.

Biomethanation is a method well-known in the art. The process described in WO2018/234058 could for instance be used as biomethanation process. Thus, preferably, in this embodiment, the biomethanation step is carried out in dedicated reactor, in particular as described in WO2018/234058.

The water gas-shift reaction is also well known in the art: CO + H₂O ⇄ CO₂ + H₂. It yields hydrogen gas and CO₂ from water and CO. Biological water gas-shift reaction is carried out using specific bacteria populations. It may also be catalysed using chemical catalysts (heterogeneous or homogeneous).

In another particular embodiment, at least part of the gaseous fraction G1 of step b) is burnt to produce energy. The produced energy is thermal (heat) and/or electrical. The heat fraction may be recovered as such, and used to:
- maintain the temperature of step c) (fermentation or anaerobic digestion), and/or
- offset at least part of the heat required for step b).

Energy is generally produced by burning the gaseous fraction G1 in a gas turbine or an engine, in particular a combined heated power (CHP) engine.

When the anaerobic treatment is anaerobic digestion, in particular, at least part of the second gaseous fraction G2 is used to produce energy. The produced energy is thermal (heat) and/or electrical. The heat fraction may be recovered as such, and used to:
- maintain the temperature of step c) (fermentation or anaerobic digestion), and/or
- offset at least part of the heat required for step b).

In a variant, at least part of the second gaseous fraction G2 is used as natural gas, for instance as compressed natural gas or liquefied natural gas, or it is injected into the gas network.

In another particular embodiment, when the anaerobic treatment is a digestion, at least part of the gaseous fraction G1 of step b) may be mixed with the filtrate F1, to improve methane production. Mixing is usually carried out by bubbling the gaseous fraction G1 into the filtrate F1. Optionally, in this embodiment, the gaseous fraction G1 is subjected to a biomethanation step prior to mixing, so as to further increase its methane content.

Preferably, the process further includes a step for recovering nutrients, in particular phosphorus (P), from the inorganic solid residue (ashes) produced in step b). Nutrient recovery processes are known in the art.

As used herein, a "nutrient" is understood as a chemical substance useful as a soil amendment, in particular for agricultural applications. In particular, nutrients comprise the following chemical elements: phosphorus (P). Phosphorus is usually in the form of phosphate salts.

The process may further include a step of Wet Air Oxidation upstream the HTG in supercritical conditions. This enables sludge oxidation to produce heat that is re-used to heat the HTG reactor.

The invention further relates to an installation for treating carbonaceous material, said installation comprising:
- a HTG reactor suitable for hydrothermal gasification, having a first inlet (I_{cm}) and a first (Oₛ), second (O_{g1}) and third (O_{f1}) outlets, the HTG reactor being configured to be fed at the first inlet with a carbonaceous material CM, and to produce:
   - an inorganic solid residue, recovered at the first outlet (Oₛ),
   - a first gaseous fraction G1 comprising CH₄, CO, CO₂ and H₂ recovered at the second outlet (O_{g1}), and
   - a filtrate F1, optionally containing readily biodegradable carbons such as VFAs, recovered at the third outlet (O_{f1}),
      and
- an anaerobic tank, suitable for fermentation or anaerobic digestion, having a first inlet inlet (Iₗ), and a first (O_{d}) outlet,
   the first inlet (Iₗ) being in fluid connection with the third outlet (O_{f1}) of the HTG reactor, the anaerobic tank being configured to be fed at the first inlet (Iₗ) with filtrate F1, and to produce:
   - a digestate at the first outlet (O_{d}).

In a particular embodiment, the installation further comprises a phase separator having:
- a phase separator inlet (I_{d}) connected to the first outlet of the anaerobic tank (O_{d}),
- a first phase separator outlet (O_{lf})
- a second phase separator outlet (O_{sf}),
the phase separator being configured to be fed at the phase separator inlet (I_{d}) with the digestate, and to separate the digestate into a liquid fraction toward the first phase separator outlet (O_{lf}) and a solid fraction toward the second phase separator outlet (O_{sf}).

Advantageously, in this embodiment, the second outlet (O_{sf}) of the phase separator is in fluid connection with the first inlet (I_{cm}) of the HTG reactor, and the HTG reactor is configured to be fed with the solid fraction at the first inlet (I_{cm}) of the HTG reactor.

In a first embodiment, the anaerobic reactor is a fermenter.

In a second embodiment, the anaerobic reactor is a digester. In this embodiment, the digester further comprises a second outlet (O_{g2}), and the anaerobic tank is configured to further produce a second gaseous fraction G2 containing CH₄, CO₂ and optionally H₂ recovered at the second outlet (O_{g2}).

### BRIEF DESCRIPTION OF THE DRAWINGS

The accompanying drawings illustrate various non-limiting, exemplary, innovative aspects in accordance with the present description:
- Figure 1 schematically represents a block diagram with the steps of the method for treating carbonaceous material according to the invention;
- Figure 2 schematically represents a block diagram with optional steps of the method for treating carbonaceous material according to the invention;
- Figure 3 schematically represents a first embodiment of the installation for treating carbonaceous material according to the invention;
- Figure 4 schematically represents another embodiment of the installation for treating carbonaceous material according to the invention;
- Figure 5 schematically represents another embodiment of the installation for treating carbonaceous material according to the invention;
- Figure 6 schematically represents another embodiment of the installation for treating carbonaceous material according to the invention.

### DETAILED DISCLOSURE

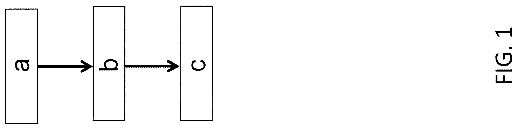

Figure 1 schematically represents a block diagram with the steps of the method for treating carbonaceous material according to the invention. The method for treating carbonaceous material comprises a step a) of providing a carbonaceous material CM. The method according to the invention further comprises a step b) of subjecting the carbonaceous material CM to hydrothermal gasification in a HTG reactor 11, thereby producing an inorganic solid residue 12, a first gaseous fraction G1 comprising CH₄, CO, CO₂ and H₂ (i.e. syngas), and a filtrate F1 containing readily biodegradable carbons such as VFAs. And the method according to the invention comprises a step c) of subjecting at least part of the filtrate F1 to an anaerobic treatment step in an anaerobic tank 13, leading to a digestate 14.

The method according to the invention enables to produce Readily Biodegradable Carbons rather than fully converting the organic matter into syngas, the pressure and temperature operating conditions of HTG are lowered. Furthermore the anaerobic treatment reduces the HTG energy requirements by reducing the need to fully convert all organic matter into syngas, and is improved by the presence of RBCs into the filtrate F1.

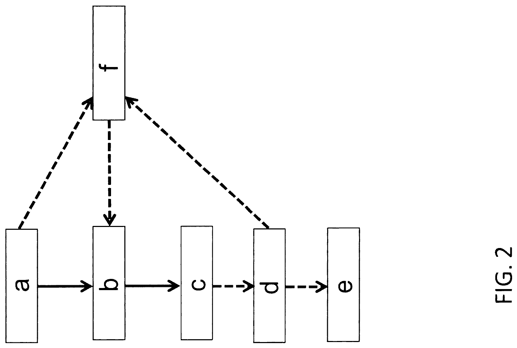

Figure 2 schematically represents a block diagram with optional steps of the method for treating carbonaceous material according to the invention. The method according to the invention may comprise all the optional steps or only one or some of them.

Advantageously, the HTG step b) is performed at a temperature of 500°C or below, preferably of 400°C or below, so that water in the HTG reactor 11 is exposed to a temperature and a pressure allowing to keep water in a fluid fraction under sub- or supercritical conditions. Pressure in the HTG step depends on the temperature and is chosen so as to maintain sub- or supercritical conditions. To maintain the desired sub- or supercritical conditions and sufficient degradation of the organic matter, the temperature of the HTG step is advantageously of 300°C or above, preferably of 330°C or above. This temperature condition enables to promote the separation of the carbonaceous material CM into the various products of the HTG.

The method of the invention may comprise a step d) of separating the digestate 14 of step c) into a liquid fraction 16 and a solid fraction 17. Advantageously, the liquid fraction 16 of step d) is subjected to a step e) of recovering the added value compounds such as VFAs.

In an embodiment of the invention, the solid fraction 17 of step d) is combined (step f) with the carbonaceous material CM and the resulting mixture is subjected to the HTG step b).

Advantageously, the carbonaceous material CM has a dry solid content of between 3% and 25%.

Advantageously, the carbonaceous material CM has a carbon/nitrogen ratio (C/N ratio) of 40 or less.

Optionally, the method of the invention may comprise a step of cooling the at least part of the filtrate F1 subjected to the anaerobic treatment step prior to the anaerobic treatment. The step of cooling may be performed with cooling techniques known by the person skilled in the art.

Optionally, and if the ammonium concentration in the filtrate F1 is too high, the method of the invention may comprise a step of reducing the ammonium concentration in the filtrate F1. This can be done using techniques known by the person skilled in the art, for example diluting the filtrate F1 with water. This enables to reduce the ammonium concentration in the filtrate F1, thus avoiding ammonia toxicity problems in the anaerobic treatment step.

The method of the invention makes it possible to lower, or even eliminate, the sludge amount to be disposed of, whereas it maximizes the syngas and biogas production. Furthermore, the syngas and biogas production may be upgraded downstream, for example through electricity production, grid reinjection, NLG production, etc. When the anaerobic treatment is a fermentation, the method of the invention enables to produce a high concentrated, high value liquid. It also removes the need for a dewatering step downstream the fermentation reactor (saving OPEx, in particular by avoiding the use of polymers). Nevertheless, the possibility for land application of sludge (typically either class A or class B sludge) is maintained. Also, the method according to the invention enables the nutrient recovery, in particular phosphorus (P) in the ashes produced in the HTG step.

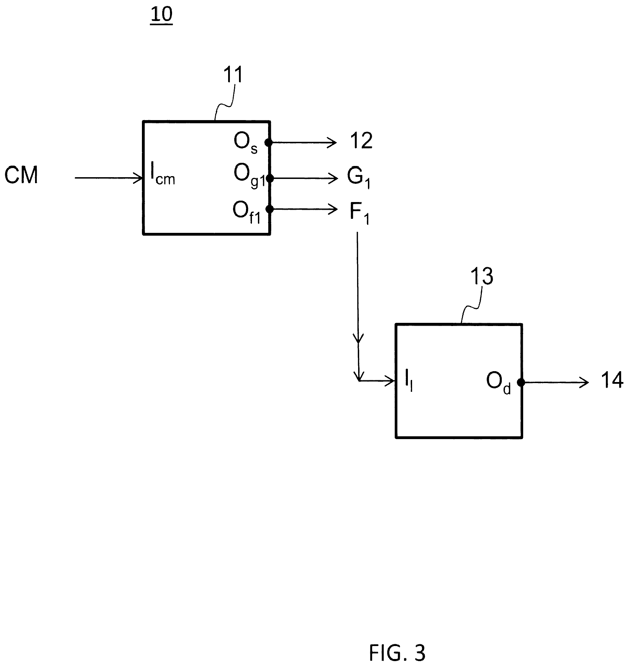

Figure 3 schematically represents a first embodiment of the installation 10 for treating carbonaceous material according to the invention. The installation 10 for treating carbonaceous material according to the invention comprises a HTG reactor 11 suitable for hydrothermal gasification, having a first inlet I_{cm} and a first Oₛ, second O_{g1} and third O_{f1} outlets. The HTG reactor 11 is configured to be fed at the first inlet I_{cm} with a carbonaceous material CM, and to produce an inorganic solid residue 12, also called ashes, recovered at the first outlet Oₛ, a first gaseous fraction G1 comprising CH₄, CO, CO₂ and H₂ recovered at the second outlet O_{g1}, and a filtrate F1 containing readily biodegradable carbons such as VFAs, recovered at the third outlet O_{f1}.

The installation 10 further comprises an anaerobic tank 13, suitable for fermentation or anaerobic digestion, having a first inlet Iₗ and a first outlet O_{d}. The first inlet Iₗ is in fluid connection with the third outlet O_{f1} of the HTG reactor 11. The anaerobic tank 13 is configured to be fed at the first inlet Iₗ with filtrate F1, and to produce a digestate 14 recovered at the first outlet O_{d}.

The installation according to the invention enables the sludge treatment, which is reduced into syngas, which can be directly used as a fuel, without the need for drying, thickening or dewatering the sludge upstream. No organic matter is left. Ashes are concentrated in both heavy metals and nutrients, which can then be recovered. The major disadvantage of the HTG step is the severe conditions that it imposes such as high temperature and pressure. The HTG reactor should therefore be maintained at a high temperature and pressure level, which is very energy consuming. The advantage of the installation lies in the coupling of the HTG reactor and the anaerobic tank which is fed with the filtrate resulting from the HTG step. Through a digestion or fermentation step in the anaerobic tank, biogas, i.e. an energy source, is produced.

In other words, the invention couples an energy-consuming HTG step with an energy-producing anaerobic treatment. The HTG step may be performed under a low amount of oxygen to control the formation of specific products, such as easily biodegradable material and to produce energy. Such an HTG step allows the solubilization of suspended carbons in the sludge and enables a phase separation. The resulting RBCs-rich filtrate is fed to the anaerobic tank. RBCs are broken down, thus producing biogas. The other products resulting from the HTG step (inorganic solid residue, gaseous fraction) and from the anaerobic treatment (digestate, gaseous fraction) may be further processed and valued.

In the figures, the anaerobic tank 3 is represented as one unit (figures 3 to 6) and the step c) of anaerobic treatment is represented as a single step (figures 1 and 2). Nevertheless, the anaerobic treatment of the invention may be a two phase anaerobic digestion (i.e. an anaerobic digestion occurring in two phases: a mesophilic or thermophilic acidogenesis followed by a mesophilic digestion, also known as TPAD or 2PAD) downstream of the HTG step. If the anaerobic treatment is a two phase anaerobic digestion, the anaerobic tank 13 is to be understood as an anaerobic digester configured to operate a two phase anaerobic digestion. This alternative enables to optimize the first fermentation step, as explained below.

Indeed heat treatments (such as pyrolysis, gasification, HTL or HTG) generate not only biodegradable molecules (VFA and sugars) but also numerous phenolic derivatives (nearly 50% of the secondary sludge produced). These phenolic derivatives, for example phenols and furans with high inhibitory properties, such as hydroxymethylfurfural or furfural, are known to be toxic to methanogenic populations. Therefore, a standard anaerobic digestion does not seem to be compatible downstream such a heat treatment.

Despite this toxicity, it was shown that the coupling between digestion and pyrolysis oil reduces the concentration of aromatic compounds (i.e. furfural, phenol, etc.) below the thresholds of detection as a function of the input concentration in digestion. An anaerobic microbial degradation pathway (involving Ruminococcaceae and Peptococcaceae family) could be found for the degradation of aromatic sub-compounds derived from vanillate and syringate.

A 2-phase digestion (TPAD) downstream the HTG step can degrade phenols generated during the HTG step and increase biogas production without suffering apparent inhibition in comparison to a mesophilic digester operating under the same conditions.

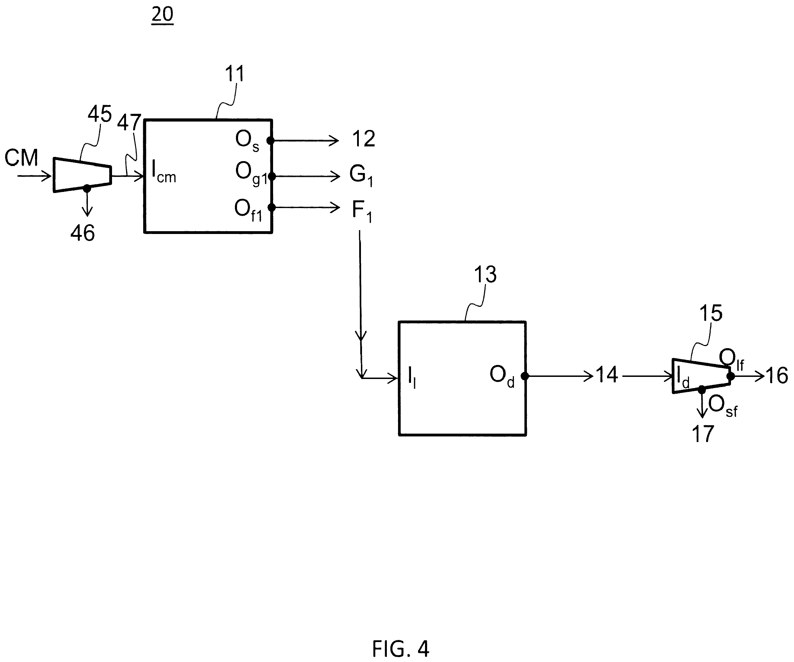

Furthermore, either in the case of a standard anaerobic treatment or in the case of a 2-phase digestion, the invention may also comprise a step of diluting the filtrate F1 produced by the HTG step before being subjected to the anaerobic treatment or the 2-phase digestion. This dilution, performed using techniques known by the person skilled in the art, enables to maintain toxicity below a certain threshold. Figure 4 schematically represents another embodiment of the installation 20 for treating carbonaceous material according to the invention. The installation 20 for treating carbonaceous material according to the invention comprises the same elements as the installation 10. The installation 20 further comprises a phase separator 15 having a phase separator inlet I_{d} connected to the first outlet O_{d} of the anaerobic tank 13, a first phase separator outlet O_{lf}, a second phase separator outlet O_{sf}. The phase separator 15 is configured to be fed at the phase separator inlet I_{d} with the digestate 14, and to separate the digestate 14 into a liquid fraction 16 toward the first phase separator outlet O_{lf} and a solid fraction 17 toward the second phase separator outlet O_{sf}.

The installation 20 represented in Figure 4 comprises an optional pre-treatment device 45, such as an optional phase separator 45. The optional phase separator 45 is configured to separate the carbonaceous material CM into a liquid fraction 46 and a solid fraction 47, in particular by dewatering, prior to being introduced into the HTG reactor 11. In this embodiment, a phase separation of the carbonaceous material CM is performed upstream the HTG and the HTG reactor is fed with the solid fraction from the phase separation. This optional phase separator enables to concentrate the carbonaceous material CM if it is too liquid. The dry solid content of the carbonaceous material CM is typically between 3 and 25%. But if it is about 3%, it is advantageous to thicken it until its dry solid content becomes about 12%.

The pre-treatment device 45 is optional and is only represented in Figure 4, but it could be implemented in each example of the invention.

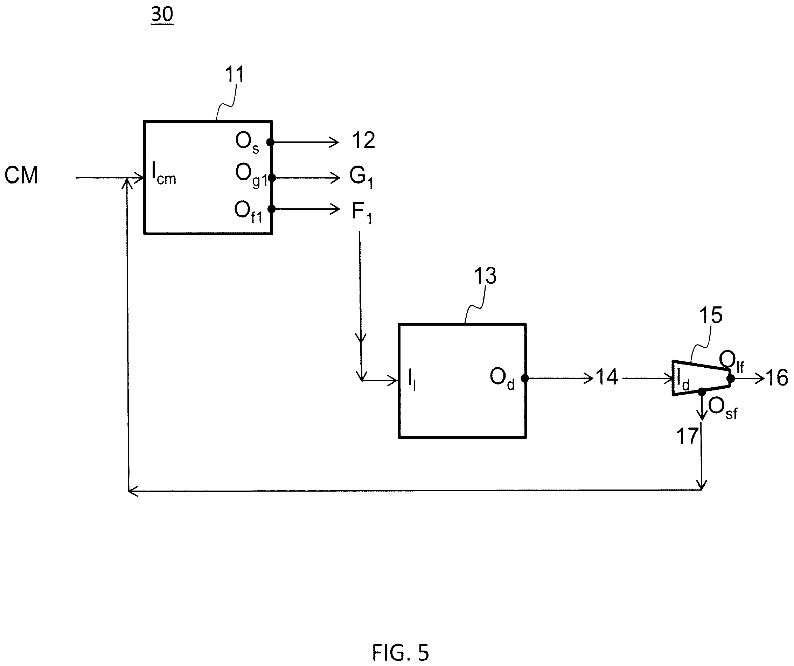

Figure 5 schematically represents another embodiment of the installation 30 for treating carbonaceous material according to the invention. The installation 30 for treating carbonaceous material according to the invention comprises the same elements as the installation 20. In the installation 30, the second outlet O_{sf} of the phase separator 15 is in fluid connection with the first inlet I_{cm} of the HTG reactor 11, and the HTG reactor 11 is configured to be fed with the solid fraction 17 at the first inlet I_{cm} of the HTG reactor 11. This recirculation of the solid fraction 17 in the HTG reactor 11 allows to lower, or even eliminate, the sludge amount to be disposed of.

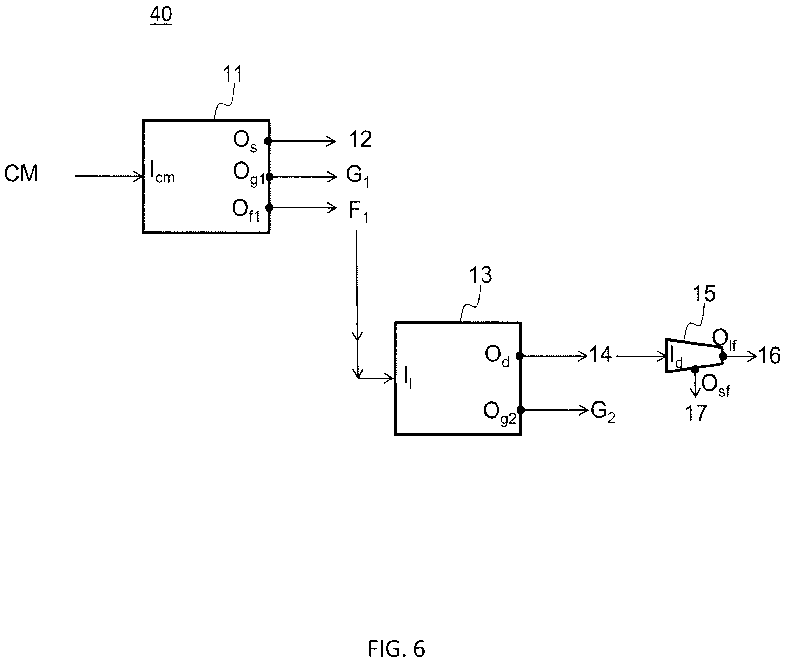

Figure 6 schematically represents another embodiment of the installation 40 for treating carbonaceous material according to the invention. The installation 40 for treating carbonaceous material according to the invention comprises the same elements as the installation 20 or 30. In the installation 40, the anaerobic tank 13 comprises a second outlet O_{g2}. The anaerobic tank 13 is configured to produce a second gaseous fraction G2 containing CH₄ and CO₂ and optionally H₂ recovered at the second outlet O_{g2}. Once recovered, at least part of the second gaseous fraction G2 may be used for burnt to produce energy. The produced energy may be thermal (heat) and/or electrical depending on the converter positioned in the installation 40. Alternatively, at least part of the second gaseous fraction G2 may be used as natural gas, for instance as compressed natural gas or liquefied natural gas, or it is injected into the gas network.

The installation 40 may comprise further optional elements for further treatments of the first gaseous fraction G1 (comprising CH₄, CO, CO₂ and H₂). The installation 40 may comprise a dedicated reactor for biomethanation of at least part of the first gaseous fraction G1. The installation 40 may comprise a converter to produce energy. Preferably the first gaseous fraction G1, or part of it, is burned using a turbine to generate electrical energy. The installation 40 may comprise a device for bioaugmentation in H₂ or in CH₄ fed with at least part of G1. The relative concentration increase of methane may be performed via biomethanation as described in WO2018/234058 and the bioaugmentation of hydrogen may be performed via water gas-shift reaction, preferably biological water gas-shift reaction.

## Claims

1. A method for treating carbonaceous material, said method comprising:
a) Providing a carbonaceous material CM,
b) Subjecting the carbonaceous material CM to hydrothermal gasification (11), thereby producing:
- an inorganic solid residue (12),
- a first gaseous fraction G1 comprising CH₄, CO, CO₂ and H₂, and
- a filtrate F1 containing readily biodegradable carbons such as VFAs,
c) Subjecting at least part of the filtrate F1 to an anaerobic treatment step, leading to a digestate (14).

2. The method of claim 1, wherein the HTG step b) is performed at a temperature of 500°C or below, preferably of 400°C or below, so that water in the HTG reactor (11) is exposed to a temperature and a pressure allowing to keep water in a fluid fraction under sub- or supercritical conditions.

3. The method of claim 1 or 2, further comprising a step d) of separating the digestate (14) of step c) into a liquid fraction (16) and a solid fraction (17).

4. The method of claim 3, wherein the liquid fraction (16) of step d) is subjected to a step e) of recovering the added value compounds such as VFAs.

5. The method of any of claims 1 to 4, wherein the solid fraction of step d) is combined (step f) with the carbonaceous material CM and the resulting mixture is subjected to the HTG step b).

6. The method of any of claims 1 to 5, wherein the carbonaceous material CM has a dry solid content of between 3% and 25%.

7. The method of any of claims 1 to 5, wherein the carbonaceous material CM has a carbon/nitrogen ratio of 40 or less.

8. An installation (10, 20, 30, 40) for treating carbonaceous material, said installation comprising:
• a HTG reactor (11) suitable for hydrothermal gasification, having a first inlet (I_{cm}) and a first (Oₛ), second (O_{g1}) and third (O_{f1}) outlets, the HTG reactor (11) being configured to be fed at the first inlet (I_{cm}) with a carbonaceous material CM, and to produce:
- an inorganic solid residue (12), recovered at the first outlet (Oₛ),
- a first gaseous fraction G1 comprising CH₄, CO, CO₂ and H₂ recovered at the second outlet (O_{g1}), and
- a filtrate F1, optionally containing readily biodegradable carbons such as VFAs, recovered at the third outlet (O_{f1}),
and
• an anaerobic tank (13), suitable for fermentation or anaerobic digestion, having a first inlet (Iₗ), and a first outlet (O_{d}),
the first inlet (Iₗ) being in fluid connection with the third outlet (O_{f1}) of the HTG reactor (11), the anaerobic tank (13) being configured to be fed at the first inlet (Iₗ) with filtrate F1, and to produce:
- a digestate (14) at the first outlet (O_{d}).

9. The installation (20, 30, 40) of claim 8, further comprising a phase separator (15) having:
- a phase separator inlet (I_{d}) connected to the first outlet (O_{d}) of the anaerobic tank (13),
- a first phase separator outlet (O_{lf})
- a second phase separator outlet (O_{sf}),
the phase separator (15) being configured to be fed at the phase separator inlet (I_{d}) with the digestate (14), and to separate the digestate (14) into a liquid fraction (16) toward the first phase separator outlet (O_{lf}) and a solid fraction (17) toward the second phase separator outlet (O_{sf}).

10. The installation (30) of claim 9, wherein the second outlet (O_{sf}) of the phase separator (15) is in fluid connection with the first inlet (I_{cm}) of the HTG reactor (11), and the HTG reactor (11) is configured to be fed with the solid fraction (17) at the first inlet (I_{cm}) of the HTG reactor (11).

11. The installation (40) of any of claims 8 to 10, wherein the anaerobic tank (13) is a digester and further comprises a second outlet (O_{g2}), and the anaerobic tank (13) is configured to further produce a second gaseous fraction G2 containing CH₄, CO₂ and optionally H₂ recovered at the second outlet (O_{g2}).
